# EUROPEAN PATENT APPLICATION

(11) **EP 0 970 836 A2**
(43) Date of publication of application: **12.01.2000**
(21) Application number: 99302593.1
(22) Date of filing: 01.04.1999
(51) Int. Cl.: B60K 5/12

(54) **Restraining link**

(30) Priority: 08.07.1998 GB 9814768
(71) Applicant: DRAFTEX INDUSTRIES LIMITED, Edinburgh EH2 3AP, Scotland (GB)
(72) Inventor: Souyri, Philippe, 44470 Carquefou (FR)
(74) Representative: Foster, David Martyn

(57) **Abstract**

A restraining link (10) such as for interconnection between the engine (62) of a vehicle and the vehicle body (64), to restrain movement of the engine (62), is described. The restraining link (10) comprises an elongate arm (12) having two resilient connectors (36) for resiliently connecting the arm (12) to the bodies (62, 64). A mass (46) is resiliently mounted on the arm (12) for vibration relative to the arm (12) when the arm (12) vibrates relative to the two bodies (62, 64). The mass (46) vibrates in anti-phase to the arm (12) such that the vibration of the arm (12), and also of the adjacent part of the vehicle body (64), is damped.

## Description

The invention relates to a restraining link for interconnection between two bodies to restrain relative movement between the two bodies, comprising link means including and extending between connection means for connecting the link means to and between the bodies, and a damping member resiliently mounted on the link means for vibration relative to the link means in directions therealong in response to vibration of the link means.

Such a link is shown, for example, in US-A-4 974 794. Here, the link means comprises two telescopically arranged hollow members each carrying a connector for connecting the respective member to one of the two bodies. The inner one of the two members defines a hollow space in which a mass is constrained for sliding movement in directions along the length of the link, the space being filled with hydraulic fluid which is subjected to a pumping action by telescoping of the two hollow members in response to vibration of the two bodies. In this way, the to and fro sliding movement of the mass can be amplified. Such an arrangement is complex and not suitable for resiliently restraining movement between the two bodies and damping their vibration in more than one direction.

According to the invention, therefore, the link as first set forth above is characterised in that the link means comprises a rigid member extending rigidly between the connection means, in that the connection means connect the link means to act resiliently and vibratingly between the bodies, and in that the damping member is also resiliently mounted on the rigid member for vibration relative thereto in directions transverse to the rigid member.

The following is a more detailed description, by way of example, of restraining links in accordance with the invention, reference being made to the appended drawings in which:
Figure 1 is a plan view of one of the restraining links;
Figure 2 is a cross-sectional view of the restraining link taken on the line II-II of Figure 1;
Figure 3 is a cross-sectional view of the restraining link taken on the line III-III of Figure 1;
Figure 4 is a schematic view of the link of Figures 1 to 3 interconnected between a vehicle engine and the vehicle body;
Figure 5 is a sectional view, taken longitudinally, of another restraining link; and
Figure 6 is a cross-sectional view of the link shown in Figure 5.

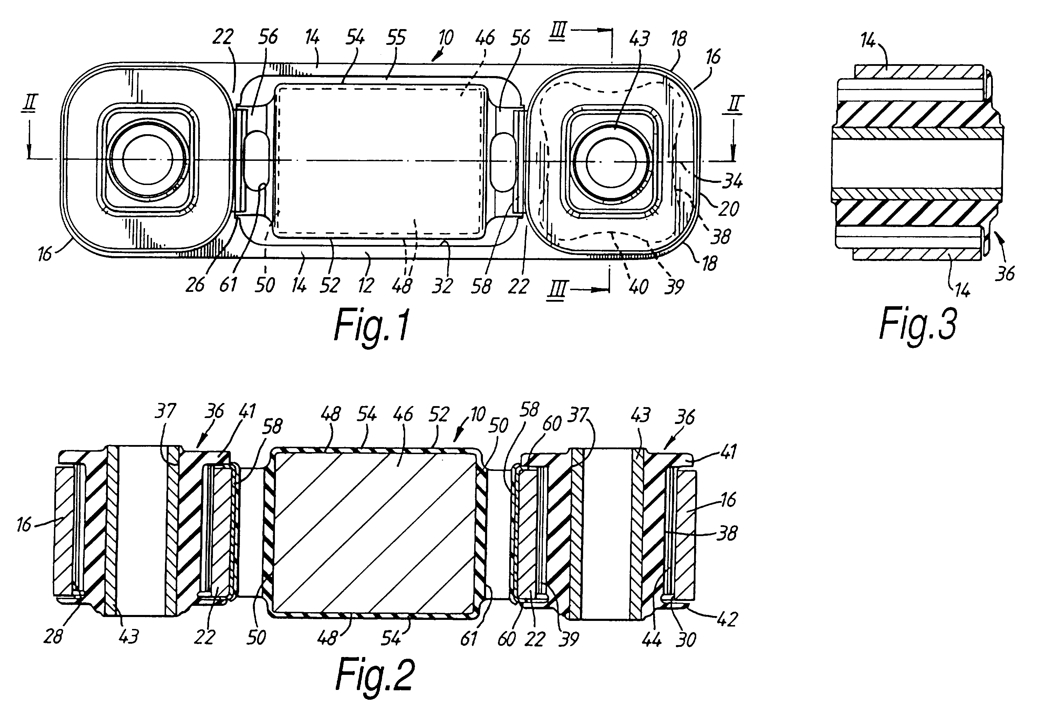

As shown in Figure 1, the restraining link 10 comprises a rigid, elongate arm in the form of a frame 12 that is formed in one piece from a suitable metal.

The frame 12 has a peripheral wall with two rectangular, parallel, side portions 14 connected at their ends by two end portions 16. Each end portion 16 has a first curved region 18 that extends from one of the side portions 14 to a centre region 20 that, in turn, extends perpendicularly to the side portions 14 to a second curved region 18 that extends to the other side portion 14.

The frame 12 also has two internal walls 22, each extending between and generally perpendicular to the two side portions 14. The internal walls 22 are spaced from one another and from the end portions 16. Each internal wall 22 has, on the side facing the other internal wall 22, a broad shallow groove 26 that extends fully across the frame 12 in a direction parallel to the peripheral and internal walls 22 of the frame 12. The grooves 26 serve a purpose described below.

Hence, the frame 12 defines first, second and third spaces 28, 30, 32 that extend fully across the frame 12 between the side portions 14. The first space 28 lies between one of the internal walls 22 and one of the end portions 16. The second space 30 lies between the other one of the internal walls 22 and the other one of the end portions 16. The third space 32 lies between the two internal walls 22. As seen in Figures 1 and 2, the first and second spaces 28, 30 are identical in shape. The third space 32 extends for a greater distance in a direction parallel to the longitudinal axis 34 of the frame 12 than the first and second spaces 28, 30.

As best seen in Figures 2 and 3, each of the first and second spaces 28, 30 receives a respective resilient mount 36 formed from an elastomer. Each mount 36 defines a central cylindrical aperture 37 and has an axially extending outer surface 38 which, in cross-section, is general quadrilateral with rounded corners 39 and concave sides 40 (shown for one of the mounts 36 by a dotted line in Figure 1). Each mount 36 also has two radially-outwardly-projecting, integral flanges 41, 42 located at respective ends of the aperture 37. As shown in Figure 2, each mount 36 extends across the associated space 28, 30, with the flanges 41, 42 lying at opposite sides of the frame 12 and the rounded corners 39 bearing against the frame 12, so that there is no play between the mount 36 and the frame 12.

The cylindrical aperture 37 of each mount 36 receives a respective, tightly fitting metal bush 43.

The third space 32 receives a metallic block 46. The block 46 has four rectangular side surfaces 48 and two square end surfaces 50. Each end surface 50 faces a respective one of the internal walls 22 and two of the side surfaces 48 face respective ones of the side portions 14 of the frame 12.

The mass of the block 46 is preferably as great as possible.

The block 46 is covered by a moulding 52 formed from an elastomer. The moulding 52 forms a thin coating 54 on each of the rectangular side surfaces 48 of the block 46. There is a gap 55 between each side portion 14 and the coating 54 on the side surface 48 facing that side portion 14. The moulding 52 also forms two resilient mounting portions 56 at respective ones of the square end surfaces 50. Each mounting portion 56 extends outwardly from the associated end surface 50 to a respective rectangular mounting plate 58 lying parallel to the end surfaces 50. Each mounting plate 58 is attached to the associated mounting portion 56 and has two lips 60 that extend, respectively, from opposed edges of the mounting plate 58, away from the associated end surface 50.

Each mounting plate 58 lies within the groove 26 of a respective one of the internal walls 22 with the lips 60 of the plate 58 lying to respective sides of the frame 12 (as best seen in Figure 2). The mounting plates 58 are conveniently formed as planar sheets - the lips 60 being bent out of the plane around the frame 12 on assembly.

Each mounting portion 56 is under compression (between the associated end surface 50 and the associated internal wall 22) so that the mounting plates 58 are pushed into the grooves 26. Hence, the block 46 is held firmly within the third space 32. The engagement of the mounting plates 58 within the grooves 26 and the engagement of the internal walls 22 between the lips 60 of the mounting plates 58 prevents the mounting plates 58 from moving relative to the internal walls 22.

Each mounting portion 56 of the moulding 52 has an aperture 61 extending across the mounting portion 56 in a direction parallel to the axes of the cylindrical apertures 37.

It will be appreciated that the resilient nature of the mounting portions 56 allows the block 46 to vibrate within the third space 32. This serves a purpose described below. Additionally, by covering the block 46, the moulding 52 serves to prevent corrosion of the block 46.

The arrangement is such that the mounting portions 56 urge the block 46 into a position relative to the frame 12 where the centre of mass of the block 46 coincides with the centre of mass of the frame 12 on the longitudinal axis 34 of the frame 12 - the block 46 lying in this position when the frame 12 and the block 46 are at rest. The block 46 is shown in this position in Figures 1, 2 and 3.

The gaps 55 are chosen such that, during use as described below, the vibrating block 46 does not contact the frame 12.

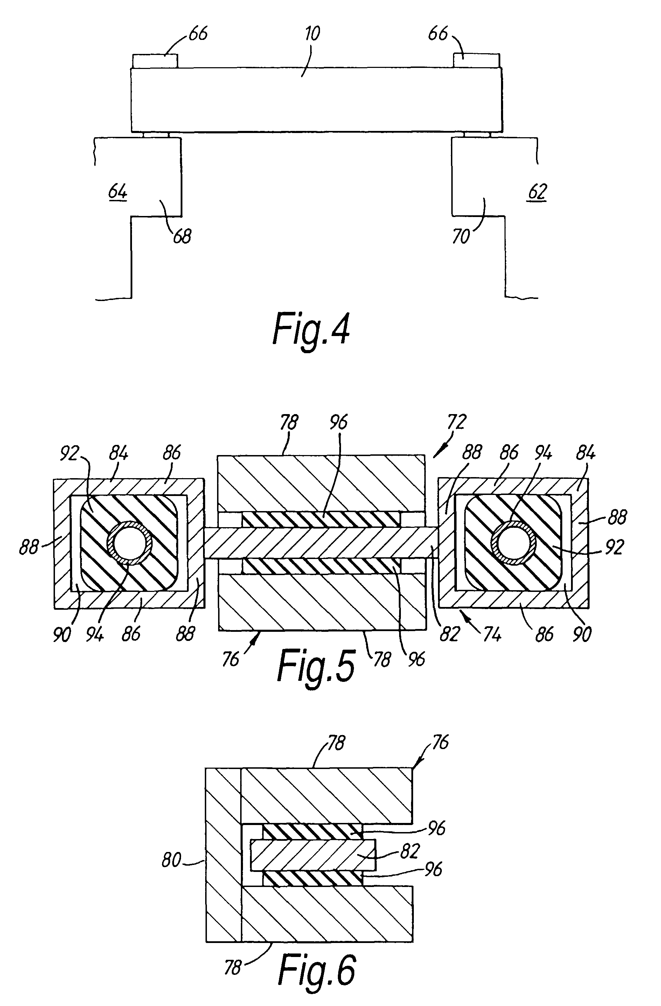

As shown in Figure 4, the restraining link 10 can be interconnected, in a generally horizontal orientation, between an engine 62 of a motor vehicle and the vehicle body 64 - the weight of the engine 62 being supported by suitable supports (not shown) provided on the body 64.

The link 10 is connected to the vehicle body 64 by a bolt 66 passing through one of the metal bushes 43 into a suitable fixture 68 on the body 64. Similarly, the link 10 is connected to the engine 62 by a bolt 66 passing through the other metal bush 43 into a suitable fixture 70 on the engine 62.

During operation of the vehicle, change in engine torque and acceleration and deceleration of the vehicle cause the engine 62 to move relative to the body 64 such that the engine fixture 70 moves generally horizontally relative to the body fixture 68. This movement is restrained by the link 10 - the resilient mounts 36 deforming to allow a desired amount of movement. The resilient mounts 36 can also filter engine vibration transmitted to the vehicle body 64 by the link 10.

An abrupt movement of the engine 62 relative to the vehicle body 64 can initiate vibration of the frame 12 relative to the two bodies. For example, an abrupt movement of the engine 62 causing the engine fixture 70 to move to the right as shown in Figure 4 can cause the frame 12 to vibrate generally linearly, generally on the longitudinal axis 34 of the frame 12. Such vibrations cause corresponding vibrations of the parts of the body adjacent the fixture 64, and such vibrations can cause discomfort to the occupants of the vehicle and can set up sympathetic vibrations in other parts of the vehicle, causing other components of the vehicle to resonate so producing nuisance noise.

The purpose of the block 46 is to prevent or reduce these undesirable vibrations. The features of the link 10 that influence the resonant frequency of the block 46 within the link 10 (e.g. the resilience of the mounting portions 56) are chosen such that the resonant frequency of the block is lower than the major frequency or frequencies of vibration of the frame 12 during operation of the vehicle ( or at least the major frequency or frequencies of vibration ofthe frame that cause discomfort or nuisance noise). The benefit ofthis is that vibration of the frame 12 at frequencies above the resonant frequency ofthe block 46 causes the block 46 to vibrate (also generally linearly, generally on the longitudinal axis 34 of the frame 12) in anti-phase to the vibration of the frame 12 such that the vibration of the block 46 tends to damp the vibration of the frame 12. Additionally the vibration of the body 64 may also be reduced by the vibration of the block 46.

It will be apparent that, during vibration of the frame 12 and block 46 as described above, the centres of mass of the frame 12 and the block 46 move on substantially coinciding paths (generally on the longitudinal axis 34 of the frame 12). Hence, the vibration of the block 46 does not apply rotational forces to the frame 12, as would be the case if the centres of masses moved on different paths.

The frame 12 can also vibrate in other ways, not just generally linearly, generally on the longitudinal axis 34 of the frame 12. Again the block 46 will vibrate in anti-phase, damping vibration of the frame 12.

It will be appreciated that the tensile or compressive force applied to the link 10, dependent on the relative positions of the engine 62 and vehicle body 64, affects the vibratory characteristics of the frame 12, in particular its resonant frequency, as the force is applied to the mounts 36 and causes deformation of the mounts 36. However, as the block 46 is mounted solely on the frame 12 and the frame 12 is rigid, the vibratory characteristics (in particular the resonance frequency) of the block 46 are independent of forces applied to the link 10 by relative movement between the engine 62 and the vehicle body 64. This is advantageous.

In order to damp vibrations of the body 64 (caused by the vibrating link 10), a block similar to the block 46 could be resiliently mounted directly on the body 64. However, the mass of such a block would have to be much greater than the mass of the block 46, whose effect is magnified by acting through the link 10. Furthermore, by mounting the block on the link itself, a self-contained unit is produced.

The arrangement is such that the stiffness of the link increases with frequency up to the resonant frequency of the block 46, and then decreases rapidly to a low point which occurs just above the resonant frequency. The damping effect of the block 46 is at its greatest when the frame 12 vibrates at a frequency slightly greater than the resonance frequency of the block 46.

It will be appreciated that many modifications may be made to the restraining link 10 described above.

Although the mounting portions 56 described above are identical to one another in shape, size and resilience, this may not necessarily be the case. The mounting portions 56 could differ from one another in shape, size or resilience to achieve a desired vibratory effect.

Although, in the restraining link 10 described above, the block 46 is urged into a position relative to the frame 12 where the centres of mass of the block 46 and the frame 12 are coincident, this need not be the case. In some applications it may be desirable for the centres of mass to be spaced from one another and for the centres of mass to move on respective different paths when the frame 12 and the block 46 vibrate. In this way, the vibration of the block 46 applies rotational forces to the frame 12. This may be desirable to reduce discomfort and nuisance noise.

The block 46 need not be metallic. Other materials, preferably having relatively high densities, may be used. Additionally, it is not necessary to mount the block 46 in the frame 12 using the moulding 52. The block 46 may be mounted in the frame 12 by other means allowing suitable vibration of the block 46 relative to the frame 12. When the moulding 52 is used, the mounting portions 56 need not be provided with the apertures 61.

A second restraining link 72 is shown in Figures 5 and 6.

The second link 72 comprises a rigid elongate arm 74 and a U-shaped member 76 having two parallel arms 78 connected by a connecting portion 80.

The rigid elongate arm 74 is formed from a central bar 82 and two frames 84 that are attached to respective ends of the bar 82. Each frame 84 has two rectangular, parallel side walls 86 that are connected by two rectangular, parallel end walls 88 - the frame 84 being connected to the bar 82 by one of the end walls 88. The side walls 86 and end walls 88 of each frame 84 define a space 90 that is rectangular in section as shown in Figure 5.

The rectangular space 90 of each frame 84 receives a respective resilient mount 92. Each resilient mount 92 is provided with a central aperture which receives a respective cylindrical metal bush 94.

The U-shaped member 76 is mounted on the rigid elongate arm 74 by two resilient mounts 96 such that the bar 84 lies within the arms 78 of the U-shaped member 76 and the U-shaped member 76 lies between the two frames 82. As best seen in Figure 6, each resilient mount 96 lies between a respective side of the bar 82 and a respective arm 78 of the U-shaped member 76.

It will be appreciated that the resilient nature of the mounts 96 allows the U-shaped member 76 to vibrate relative to the rigid elongate arm 74. The gaps between the bar 82 and the U-shaped member 76 and between the frames 84 and the U-shaped member 76 are chosen such that, during use as described below, the vibrating U-shaped member 76 does not contact the rigid elongate arm 74.

It will also be noted that because of the shape of the U-shaped member 76 the centre of mass of the U-shaped member 76 lies to one side of the longitudinal axis of the rigid elongate arm 74. Hence the centres of mass of the U-shaped member 76 and the rigid elongate arm 74 are spaced from one another. However, they can (with a modified construction) be the same.

In use, the restraining link 72 can be interconnected, in a similar manner to the link 10, between a vehicle body (not shown) and the engine (not shown) of the vehicle by bolts (not shown) passing through the cylindrical bushes 94 into, respectively, suitable fixtures (not shown) on the vehicle body and engine.

The restraining link 72 operates in a similar manner to the restraining link 10. The resilient mounts 96 deform to allow a desired amount of movement between the vehicle body and the engine and can also filter engine vibration transmitted to the vehicle body by the link 72.

The resiliently mounted U-shaped member 76 has a similar damping effect to the resiliently mounted block 46. The U-shaped member 76 vibrates in anti-phase to the elongate arm 74 in response to vibration of the rigid elongate arm 74 at higher frequencies than the resonant frequency of the U-shaped member 76. This damps the vibration of the elongate arm 74. Additionally, as the U-shaped member 76 and the elongate arm 74 vibrate on different paths, the vibration of the U-shaped member 76 applies rotational forces to the elongate arm 74. The vibration of the U-shaped member may also reduce vibration of the vehicle body.

It will be appreciated that the tensile or compressive forces applied to the rigid elongate arm 74 affect the vibratory characteristics of the arm 74 (in particular its resonant frequency). However, as the U-shaped member 76 is mounted solely on the elongate arm 74 and as the elongate arm 74 is rigid the vibratory characteristics (in particular resonant frequency) of the U-shaped member 76 are independent of forces applied to the restraining link 72.

It will be appreciated that the restraining links may take many other different forms. For example, a restraining link could have a central tubular part connected between resilient mounts for respective connection to the body and the engine, with a block corresponding to the block 46 or the U-shaped member 76 resiliently vibratable within and axially of the tubular part.

In another preferred embodiment, a restraining link comprising a rigid member having two connection means for inter-connecting the rigid member between two bodies and another member resiliently mounted to the rigid member, may be formed such that the centre of mass of the rigid member is coincident with one of the connections means. The link could be interconnected between a vehicle engine and the vehicle body - the connection means coincident with the centre of mass of the rigid member being used to connect the rigid member to the vehicle body. This may further reduce vibration transmitted to the vehicle body.

The principle of using a member resiliently mounted on a rigid member of a link to dampen vibration of the rigid member can be applied to different types of restraining links - e.g., torque recovery links, link-type limiters and anti-vibration supports, particularly for the automobile industry.

For example, a restraining link in accordance with the invention can be used to wholly or partially support the weight of a vehicle engine - the rigid member of the link being interconnected generally vertically between the engine and the vehicle chassis (either above or below the engine) and the resiliently mounted member damping vibration of the rigid member as described above.

## Claims

1. A restraining link for interconnection between two bodies to restrain relative movement between the two bodies, comprising link means (12,17) including and extending between connection means (16,18;92) for connecting the link means (12,74) to and between the bodies, and a damping member (46;76) resiliently mounted on the link means (12) for vibration relative to the link means (12;74) in directions therealong in response to vibration of the link means (12;74), characterised in that the link means (12;74) comprises a rigid member extending rigidly between the connection means (16,18;92), in that the connection means (16,18;92) connect the link means (12;74) to act resiliently and vibratingly between the bodies, and in that the damping member (46;76) is also resiliently mounted on the rigid member (12;74) for vibration relative thereto in directions transverse to the rigid member.

2. A restraining link according to claim 1, characterised in that the damping member (46;76) has a resonant frequency that is independent of stress in the restraining link.

3. A restraining link according to claim 1 or 2, characterised in that the rigid member (12) defines a space (32) in which is resiliently received the damping member (46).

4. A restraining link according to claim 3, characterised in that the space (32) has two opposed surfaces (22) spaced apart along the length of the rigid member (12), and by respective resilient mountings (56) extending from the surfaces (22) to and resiliently mounting the damping member (46).

5. A restraining link according to claim 4, characterised in that the resilient mountings (56) are identical to one another in shape, size and resilience.

6. A restraining link according to claim 4, characterised in that the resilient mountings (56) differ from one another in shape, size or resilience.

7. A restraining link according to any one of claims 4 to 6, characterised in that each resilient mounting (56) is under compression between the damping member (46) and the respective surface (22).

8. A restraining link according to claim 1 or 2, characterised in that the rigid member (74) is elongate having two ends (84) and a central portion (82) therebetween and the damping member (76) is U-shaped, the U-shaped member (76) being resiliently mounted on the central portion (82).

9. A restraining link according to any preceding claim, characterised in that the connection means comprise respective resilient connectors (36,92) between which rigid member (12) extends.

10. A restraining link according to any preceding claim, characterised in that the damping member (46,76) is a rigid mass.
